Europäisches Patentamt

European Patent Office

Office européen des brevets

(19)

(11) **EP 1 050 008 B1**

(12) **EUROPÄISCHE PATENTSCHRIFT**

(45) Veröffentlichungstag und Bekanntmachung des Hinweises auf die Patenterteilung:
**02.05.2003 Patentblatt 2003/18**

(21) Anmeldenummer: **99906131.0**

(22) Anmeldetag: **15.01.1999**

(51) Int Cl.⁷: $G06K\ 7/00$

(86) Internationale Anmeldenummer:
**PCT/EP99/00210**

(87) Internationale Veröffentlichungsnummer:
**WO 99/038103 (29.07.1999 Gazette 1999/30)**

(54) **VORRICHTUNG UND VERFAHREN FÜR DIE ERKENNUNG ECHTER ELEKTRONISCHER IC-KARTEN**

DEVICE AND METHOD FOR RECOGNIZING AUTHENTIC ELECTRONIC INTEGRATED CIRCUIT CARDS

DISPOSITIF ET PROCEDE POUR CONTROLER L'AUTHENTICITE DE CARTES ELECTRONIQUES A CIRCUIT INTEGRE

(84) Benannte Vertragsstaaten:
**AT BE CH CY DE DK ES FI FR GB GR IE IT LI LU MC NL PT SE**

(30) Priorität: **23.01.1998 CH 15098**

(43) Veröffentlichungstag der Anmeldung:
**08.11.2000 Patentblatt 2000/45**

(73) Patentinhaber: **IPM International SA**
**1211 Genève 16 (CH)**

(72) Erfinder: **VAUCLIN, Philippe**
**F-74000 Annecy (FR)**

(74) Vertreter: **Wenger, Joel-Théophile**
**Leman Consulting S.A.**
**62 route de Clementy**
**1260 Nyon (CH)**

(56) Entgegenhaltungen:
**DE-C- 19 523 275        US-A- 5 414 835**

**Beschreibung**

Die Erfindung bezieht sich auf eine Vorrichtung für die Erkennung echter elektronischer IC - Karten in Kartenlesern gemäss dem Oberbegriff des Anspruchs 1 und ein Verfahren zur Echtheitserkennung von elektronischen IC - Karten in Kartenlesern gemäss dem Oberbegriff des Anspruchs 7.

Solche Vorrichtungen und Verfahren eignen sich für Kartenleser, die in unbewachten Zutrittskontrollgeräten eine Identifikation vornehmen und in Verkaufsgeräten aller Art, wie Telephone, Gas-, Wasser, Elektrizitätsmeter, Fernsehapparaten ("Pay TV"), Bankautomaten, Genuss- und Lebensmittelautomaten usw., eine Dienstleistung zumessen, und ermöglichen eine Erkennung falscher elektronischer IC - Karten, die in betrügerischen Absicht in den Kartenleser eingeführt werden, um sich Zutritt oder Dienstleistungen zu erschleichen.

Allgemein werden Karten aus einem Stück Plastik mit einer integrierten Schaltung als IC - Karten bezeichnet und weisen meist die in der ISO Norm 7816-1 festgelegten Abmessungen (85,4 mm x 54 mm bei einer Dicke von 0,76 mm) auf. Sie werden im alltäglichen Zahlungsverkehr eingesetzt und auch als Ausweiskarte aller Art gebraucht. Die IC - Karten tragen Bezeichnungen wie "smart card", elektronische Geldbörse, vorbezahlte Wertkarten für Dienstleistungen, Ausweis- und Servicekarten usw. in Abhängigkeit von den Fähigkeiten der integrierten Schaltung. In "How 'Smart' Can We Get" von Mike Arnavutian in British Telecommunications Engineering, Vol. 15, Jan. 1997 sind neben einem kurzen Abriss über die verschiedenen Typen der IC - Karten und deren Verwendung auch die Anzahl hergestellter und verkaufter IC - Karten angegeben, wobei die zum voraus bezahlten Memory - Karten für das Bezahlen von Gesprächsgebühren bei Telephonautomaten, von Parkinggebühren usw. die weitaus am häufigsten gebrauchten sind.

Die IC - Karten teilen sich in zwei Hauptgruppen auf, die eine Gruppe weist das bekannte Kontaktfeld auf, über das ein Kartenleser direkte elektrische Kontakte zur integrierten Schaltung der IC - Karte herstellt, und die andere Gruppe baut über eingebaute Antennen eine Hochfrequenz - Verbindung mit dem Kartenleser auf. Bereits sind auch IC - Karten bekannt, die sowohl über elektrische Kontakte als auch über eine Hochfrequenz - Verbindung einen Datenaustausch bewerkstelligen können.

Die IC - Karten stellen Geldwerte dar und bilden daher einen Anreiz für Unberechtigte, solche Karten nachzuahmen. Eine erste Generation von Betrugsversuchen basierte auf der Idee, die Arbeitsweise der integrierten Schaltungen mit einem Kleinrechner nachzuahmen, wobei der ausserhalb des Kartenlesers befindliche Kleinrechner über Zuleitungen mit den Kontaktfeldern einer defekten IC - Karte verbunden ist. Die derart vorbereitete IC - Karte wird anstelle einer echten IC - Karte in den Kartenleser eingeführt und stellt dort die Verbindung vom Kleinrechner zu den Schaltkreisen des Kartenlesers her. Gegen diese Art von Betrügereien werden die Kartenleser mit Vorrichtungen geschützt, wie sie beispielsweise die Patentschriften EP-A 468'848 und EP-A 561'124 beschreiben. Die Vorrichtungen weisen spezielle Sonden zum Aufspüren der von diesen Zuleitungen ausgestrahlten Signalen auf. Sobald die Sonden solche solche Signale empfangen, wird der Datenaustausch zwischen der IC - Karte und dem Kartenleser abgebrochen. Andere Vorrichtungen weisen am Eingang eine Klappe auf, die zuerst vollständig schliessen muss, bevor der Datenaustausch überhaupt aufgenommen wird, wie aus dem Deutschen Gebrauchsmuster DE-U 89'07699.0 oder der EP-A 468'146 bekannt ist. In der DE-A 39'16'812 ist die Klappe als Messer ausgebildet, die solche Zuleitungen einfach kappt.

Die so geschützten Kartenleser werden in zunehmendem Masse durch nachahmende autonome IC - Karten betrogen, die im Kartenkörper untergebrachte integrierte Schaltkreise enthalten und die originale IC - Kartenschaltung mit einem programmierten Mikrocomputer vortäuschen.

Das Dokument US 5'414'835 offenbart die Merkmale aus dem Oberbegriff der Ansprüche 1 und 7. Ein Kartenleser mit einem Identifizierungsverfahren für asynchronen IC - Karten misst die Reaktionszeit der IC - Karte zwischen einem Reset - Signal des Kartenlesers und dem Eintreffen einer ersten Antwort der IC - Karte an den Kartenleser. Der Kartentyp lässt sich aufgrund dieser Reaktionszeit ("Answer to Reset" oder ATR) identifizieren. Ist die Reaktionszeit innerhalb bestimmter Grenzen, wird der weitere Datenaustausch zugelassen, wobei die Reaktionszeit der IC - Karte auf jeden Abfragebefehl des Kartenlesers weiterhin überwacht werden kann. Liegen die Reaktionszeiten ausserhalb der zugelassenen Werte, wird der Datenaustausch abgebrochen.

Die DE 195 23 275 C1 schlägt vor, in der Wartezeit zwischen dem Reset - Signal des Kartenlesers und der Antwort der asynchronen IC - Karte eine Instruktion an den internen Frequenzteiler der IC - Karte zu senden, um die Arbeitsfrequenz der IC - Karte zu erhöhen und die ATR - Zeit abzukürzen bzw. den Datenaustausch zu beschleunigen. Eine Überprüfung ist nicht vorgesehen.

Die Reaktionszeiten der IC - Karten sind gemessen in Perioden der für den Datenaustausch verwendeten Taktfolge lang. Gemäss DE 195 23 275 C1 sind Warteschlaufen vorgesehen, die die Reaktionszeit bestimmen. Daher eignet sich die Reaktionszeit nicht für die Erkennung der nachahmenden autonomen IC - Karten.

Aufgabe der Erfindung ist es, eine kostengünstige Vorrichtung für Kartenleser zu schaffen und ein Verfahren anzugeben, das sich besser als die Reaktionszeit eignet, um echte synchrone IC - Karten von nachahmenden autonomen IC - Karten zu unterscheiden und die erkannten nachahmenden autonomen IC - Karten zurückzuweisen.

Die genannten Aufgaben werden erfindungsgemäss durch die Merkmale des Anspruchs 1 und des Anspruchs 7 gelöst. Vorteilhafte Ausgestaltungen ergeben sich aus den abhängigen Ansprüchen.

Nachfolgend werden Ausführungsbeispiele der Erfindung anhand der Figuren näher erläutert.

Es zeigt

Figur 1:      einen Kartenleser,

Figur 2:      eine erste Messeinrichtung,

Figur 3:      ein erstes Zeitdiagramm für synchronen Datenaustausch,

Figur 4:      eine zweite Messeinrichtung und

Figur 5:      ein zweites Zeitdiagramm für synchronen Datenaustausch

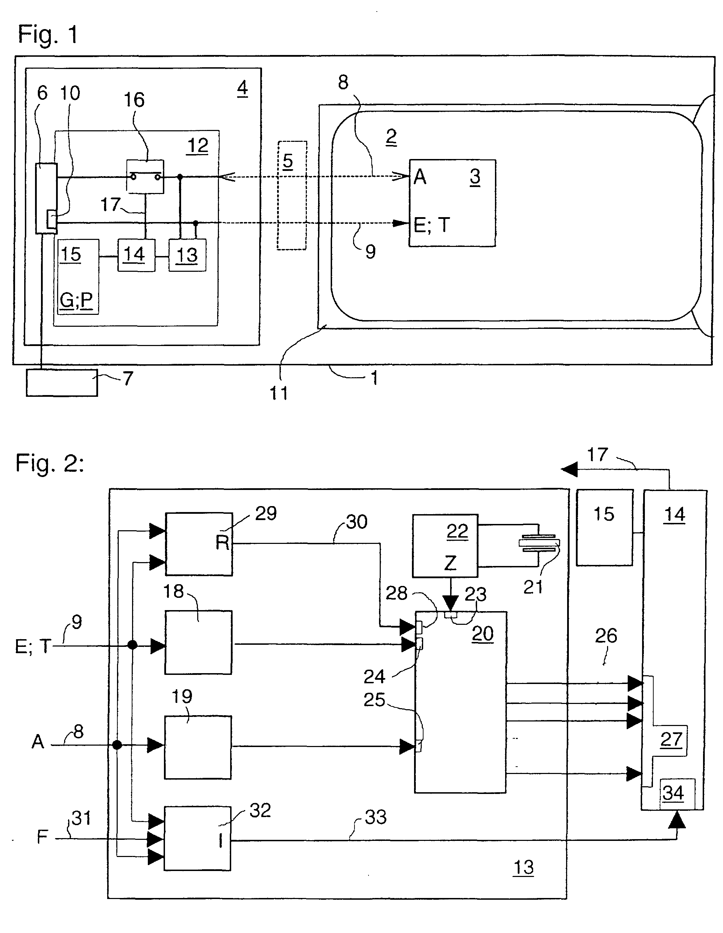

In der Figur 1 bedeutet 1 einen Kartenleser, 2 eine IC - Karte mit einer elektronischen IC - Kartenschaltung 3, 4 Mittel zum Datenaustausch zwischen dem Kartenleser 1 und der IC - Karte 2, 5 eine Kopplungseinrichtung für die Datenübertragung, 6 ein Steuermodul des Kartenlesers 1 zur Steuerung des Datenaustausches, zur Speicherung von Daten und zur Weitergabe von Daten und Befehlen an ein ausserhalb des Kartenlesers 1 angeordnetes Gerät 7. Die IC - Kartenschaltung 3 ist mittels der Koppeleinrichtung 5 mit den Mitteln zum Datenaustausch 4 von und zu der IC - Kartenschaltung 3 und dem Steuermodul 6 des Kartenlesers 1 verbunden. Die Mittel zum Datenaustausch 4 messen eine zeitliche Verzögerung $\Delta t$ zwischen einem Eingangssignal E für die IC - Karte 2 und einem von der IC - Karte 2 als Antwort an den Kartenleser 1 abgegebenen Antwortsignal A. Die Messwerte der Verzögerung $\Delta t$ werden mit für die IC - Karte 2 zulässigen Grenzwerten verglichen und müssen innerhalb dieser Grenzen liegen, damit die Karte 2 als echt und zum weiteren Datenaustausch als zugelassen erkannt wird. Bei einem negativen Vergleichsergebnis weist der Kartenleser 1 die IC - Karte 2 als falsch zurück.

Der Datenaustausch mit Befehlen vom Kartenleser 1 an die IC - Kartenschaltung 3 und mit Antworten der IC - Karte 2 an den Kartenleser 1 erfolgt über einen Datenpfad 8, der als bidirektionaler Datenpfad 8 wie in der Zeichnung der Figur 1 ausgebildet ist. Andere Ausführungen der IC - Karten 2 weisen getrennte Datenleitungen für die Antworten und für die Befehle auf.

Die IC - Karten 2 unterscheiden sich auch in der Art des Datenaustausches, dem asynchronen und dem synchronen Datenaustausch. Bei beiden erzeugt ein Taktgenerator 10 im Steuermodul 6 die Taktfolge T, welche die IC - Kartenschaltung 3 mit den Mitteln zum Datenaustausch 4 synchronisieren. Beim asynchronen Datenaustausch zwischen IC - Karte 2 und dem Kartenleser 1 weist die Taktfolge T auf dem Taktpfad 9 eine vorbestimmte fixe Taktfrequenz auf. Zu einem beliebigen Zeitpunkt erscheinen auf dem Datenpfad 8 die Daten als Paket mit einer Baudrate, die durch Untersetzen aus der Taktfolge T gewonnen ist. Nach dem eingangs erwähnten Bericht von Mike Arnavutian weisen die für asynchrone IC - Karten vorgeschriebene Taktfolge T beispielsweise eine Frequenz f von etwa 3,57 MHz auf, so dass der Datenaustausch mit 9'600 Baud erfolgt.

Die am häufigsten gebrauchte Ausführung der IC - Karte 2 verwendet eine synchrone bidirektionale Datenübertragung, wobei zwischen dem Kartenleser 1 und der IC - Karte 2 Daten, die Befehle und die Antworten, auf dem Datenpfad 8 im Gleichtakt zur Taktfolge T des Taktpfads 9 ausgetauscht werden und zwar werden die Daten während einer Befehlsphase an die IC - Karte 2 gesandt und während einer der Befehlsphase folgenden Antwortphase von der IC - Karte 2 empfangen. Für jede Periode der Taktfolge T wird ein Bit des Befehls oder der Antwort übertragen.

Die Kopplungseinrichtung 5 des Kartenlesers 1 ist entsprechend der Ausführung der zu verwendenden IC - Karten 2 ausgebildet. Bei einer ersten Ausrührung des Kartenlesers 1 wird in die eine IC - Karte 2 zum Datenaustausch in eine Kartenaufnahmebucht 11 eingeführt, wobei eine direkte Kontaktierung eines Kontaktfelds auf der IC- Karte 2 durch die Koppeleinrichtung 5 so erfolgt, dass Verbindungen für den Datenpfad 8 und den Taktpfad 9 sowie für die hier nicht gezeigten Leitungen einer Stromversorgung der IC - Karte 2 und eines Reset-Signals an die IC - Kartenschaltung 3 zum Kartenleser 1 hergestellt sind. Die dafür geeigneten IC - Karten weisen beispielsweise das nach der ISO Norm 7816-2 ausgelegte Kontaktfeld auf. Soll hingegen der Datenaustausch berührungslos erfolgen, weist die Kopplungseinrichtung 5 wenigstens Antennen für den Datenpfad 8 auf. Die für den berührungslos erfolgenden Datenaustausch eingerichteten IC - Karten 2 weisen im Körper der Karte eine Antenneneinrichtung auf, so dass der Datenaustausch mit dem Kartenleser 1 mittels elektromagnetischer Hochfrequenzstrahlung erfolgen kann.

Die Mittel zum Datenaustausch 4 enthalten eine Messeinrichtung 12, die wenigstens einen Messkreis 13, eine Recheneinheit 14, einen Grenzwertspeicher 15 und einen Signalschalter 16 umfasst. Zwei Eingänge des Messkreises 13 sind mit dem Datenpfad 8 und dem Taktpfad 9 verbunden. Der Messkreises 13 stellt zeitliche Verzögerungen $\Delta t$ zwischen einem zur IC - Kartenschaltung 3 gesandten Eingangssignal E auf dem Taktpfad 9 und einem von der IC - Karte 2 als Antwort an den Kartenleser 1 abgegebenen Antwortsignal A auf dem Datenpfad 8 fest. Ein Ausgang des Messkreises 13 überträgt die gemessenen Werte der zeitlichen Verzögerung $\Delta t$ zur Recheneinheit 14, wo die Messwerte mit Grenzwerten oder Grenzwertbereichen aus dem Grenzwertspeicher 15 verglichen werden. Ueberschreiten die Messwerte der oder die zulässigen Grenzwerte oder liegen sie ausserhalb der zulässigen Grenzwertbereiche, erzeugt die Recheneinheit 14 ein Alarmsignal auf einer zum Signalschalter 16 führenden Signalleitung 17. Der Signalschalter 16 unterbricht beim Eintreffen des Alarmsignals den Datenaustausch mit der IC - Karte 2. Der Signalschalter 16 ist rein symbolisch als Unterbrecher gezeichnet, in Wirklichkeit führt die Signalleitung zum Steuermodul 6, das nach dem Empfang des Alarmsignals den Datenaustausch mit der IC - Karte 2 abbricht. Eine Alarmsignal auslösende IC - Karte 2 kann z.B. vom Kartenleser 1 aus der Kartenaufnahmebucht 11 entfernt und dem Benutzer zurückgegeben oder einbehalten (d.h. konfisziert) werden. Der vom Messkreis überwachte Datenverkehr betrifft vorzugsweise die ersten Befehls - und Antwortphasen, in denen sich die Karte identifizieren muss. Die Funktionen der Mittel zum Datenaustausch 4 und des Steuermoduls 6 können auch durch einen programmierten Mikroprozessor oder eine integrierte und festverdrahtete schnelle Logik - Schaltung (ASIC) wahrgenommen werden.

Beispielsweise weist eine erste Ausführung des Messkreises 13 in der Figur 2 zwei eine fallende Flanke registrierende Flankendetektoren 18 und 19, einen Start - Stop - Zähler 20 und einen mit einem Steuerquarz 21 gesteuerten Oszillator 22 zum Erzeugen einer Zeiteinheiten darstellenden Impulsfolge Z auf. Zeittakte der Impulsfolge Z werden über eine Leitung an den Zeittakteingang 23 des Start - Stop - Zählers 20 geführt. Ein Eingang des ersten Flankendetektors 18 ist mit dem Taktpfad 9 verbunden. Jede fallende Flanke der Taktfolge T, d.h. des Eingangssignals E, löst im ersten Flankendetektor 18 einen Rechteckimpuls als Startsignal aus, das über eine Leitung zu einem Startsignaleingang 24 des Start - Stop - Zählers 20 gelangt. Der bidirektionale Datenpfad 8 ist mit einem Eingang des zweiten Flankendetektors 19 verbunden. Jede fallende Flanke des Antwortsignals A löst im zweiten Flankendetektor 19 einen Rechteckimpuls als Stopsignal aus, das über eine Leitung zu einem Stopsignaleingang 25 des Start - Stop - Zählers 20 gelangt. Auf das Startsignal beginnt der Start - Stop - Zähler 20 die als Zeiteinheiten am Zeittakteingang 23 ankommenden Zeittakte der Impulsfolge Z aufzuzählen, bis das Stopsignal den Zählvorgang unterbricht. Die Anzahl der zwischen dem Startsignal und dem Stopsignal im Start - Stop - Zähler 20 gezählten Zeiteinheiten ist der gemessene Wert der Verzögerung $\Delta t$. Eine Messwertleitung 26 überträgt den Messwert beispielsweise parallel zu einem Messwerteingang 27 der Rechnereinheit 14, wo der Messwert auf ein Interruptsignal I zur Weiterverarbeitung übernommen wird. Anschliessend wird mit mittels eines an den Reset - Eingang 28 des Start - Stop - Zählers 20 abgegebenen Resetsignal R der Zählerstand des Start - Stop - Zählers 20 auf den Wert Null zurückgesetzt. Eine Resetschaltung 29 erzeugt das Resetsignal R, das auf einer Resetleitung 30 vom Ausgang der Resetschaltung 29 zum Reseteingang 28 geleitet wird. Die beiden Eingänge der Resetschaltung 29 sind mit dem Datenpfad 8 und dem Taktpfad 9 verbunden.

Da nur das Antwortsignal A für die Ueberwachung der Echtheit einer IC - Karte von Belang ist, kann während der Antwortphase über eine Freigabeleitung 31 ein Freigabesignal F vom Steuermodul 6 (Figur 1) an einem Eingang einer Interruptschaltung 32 des Messkreises 13 gesandt werden. Erscheinen die Daten während der Befehlsphase auf dem Datenpfad 8 mit Verzögerungen gegenüber der Taktfolge T, die kleiner sind als beim Antwortsignal A, erübrigt sich das Freigabesignal F. Die beiden andern Eingänge der Interruptschaltung 32 sind mit dem Datenpfad 8 und dem Taktpfad 9 verbunden. Ein an einem Ausgang der Interruptschaltung 32 erzeugtes Interruptsignal I wird auf eine Interruptleitung 33 abgegeben, die das Interruptsignal I an einen Interrupteingang 34 der Rechnereinheit 14 überträgt.

Die Rechnereinheit 14 vergleicht die Messwerte der Verzögerung $\Delta t$ mit den im Grenzwertspeicher 15 gespeicherten, vorbestimmten zulässigen Grenzen und gibt über die Signalleitung 17 das Alarmsignal ab, falls die Messwerte die Bedingungen für eine echte IC - Karte 2 (Figur 1) nicht erfüllen.

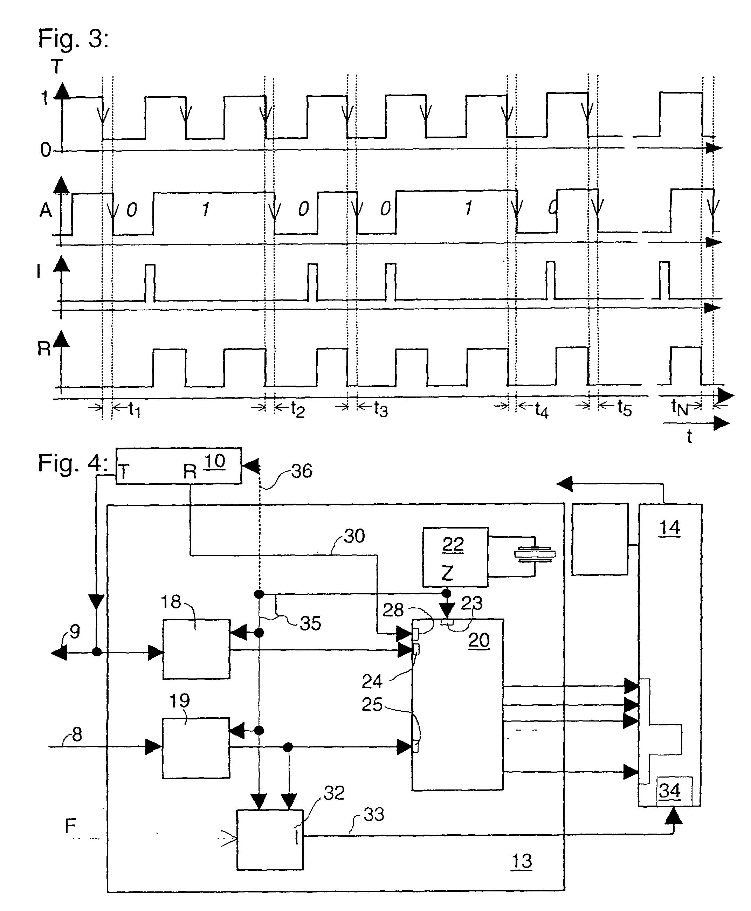

In der Figur 3 sind Diagramme der Signale A, I, R und T in Funktion der Zeit t für den Messkreis 13 dargestellt und die Funktionsweise des Messkreises 13 (Figur 2) erklärt. Das gezeigte Beispiel des Anwortsignals A überträgt zuerst einen logischen Wert "0", anschliessend folgen die logischen Werte "1, 0, 0, 1, 0" usw. Die Verzögerung $\Delta t$ wird während der Uebertragung der logischen Werte "0" gemessen. Der erste Messwert $t_1$ erstreckt sich von der ersten fallenden Flanke des Taktsignals T bis zur ersten fallenden Flanke des Antwortsignals A. Der im Start - Stop - Zähler 20 (Figur 2) gespeicherte Messwert $t_1$ wird während des Interruptsignals I von der Rechnereinheit 14 (Figur 2) übernommen, d.h. hier in der Zeitspanne, in der das Antwortsignal A auf logisch Null sowie die Taktfolge T und das Freigabesignal F auf logisch Eins sind. Das Resetsignals R zum Rückstellen des Zählerstands im Start - Stop - Zähler 20 erfolgt in den Zeitspannen, in denen sowohl das Antwortsignal A als auch die Taktfolge T auf logisch Eins sind. Wird mit dem Antwortsignal A einen Wert "1" übertragen, zählt der Start - Stop - Zähler 20 von der fallenden Flanke des Taktsignals T an, bis das Resetsignal R aktiv wird. Da die Interruptbedingung (Antwortsignal A auf logisch Null sowie die Taktfolge T und gegebenenfalls das Freigabesignal F auf logisch Eins) für ein Interruptsignal I nicht erfüllt ist, wird kein Interruptsignal I erzeugt und der Zählerstand des Start - Stop - Zählers 20 von der Rechnereinheit 14 nicht übernommen.

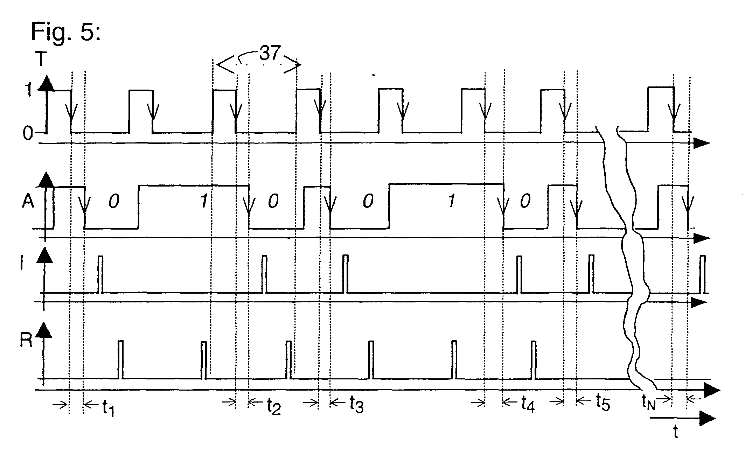

In der Figur 4 sind die Schaltungsbausteine einer zweiten Ausführung des Messkreises 13 zu den Zeittakten der Impulsfolge Z des Oszillators 22 synchronisiert. Diese Ausführung erlaubt Verzögerungen $\Delta t$ zu messen, die eine halbe Periode der Taktfolge T überschreiten. Eine Zeittaktleitung 35 verbindet den Zeittakteingang 23 mit Takteingängen der beiden Flankendetektoren 18 und 19 und der Interruptschaltung 32. Der Taktgenerator 10 ist eine Untersetzerschaltung mit M Stufen, deren Zähleingang über eine Taktleitung 36 mit dem Zeittakteingang 23 zum Empfang von Taktsignalen der Impulsfolge Z verbunden sein kann. In einer anderen Ausführung erhält die Untersetzerschaltung des Taktgenerators 10 die Taktsignale aus dem Steuermodul 6 (Figur 1). Der Taktgenerator 10 untersetzt $2^M$ mal die Taktsignale und gibt an einem mit dem Taktpfad 9 verbundenen Ausgang die Taktfolge T mit einer $2^M$ mal kleineren Frequenz ab. Jede Periode der Taktfolge T umfasst somit $2^M$ Zeittakte der Impulsfolge Z, wobei bei einem beispielhaften Tastverhältnis von 1:1 während den ersten $2^{(M-1)}$ Takten in jeder Periode das Signal der Taktfolge T auf logisch "0" und während den zweiten $2^{(M-1)}$ Zeittakten der Periode das Signal auf logisch "1" ist. Davon abweichende Tastverhältnisse mit einer längeren Phase, in der das Signal auf logisch "0" ist, erhöhen die an die fallende Flanke der Taktfolge T anschliessende Messperiode. Der Taktgenerator 10 erzeugt selbst das Resetsignal R anstelle der Resetschaltung 29 (Figur 2). Ein zweiter Ausgang des Taktgenerators 10 ist daher mit dem Reseteingang 28 über die Resetleitung 30 verbunden, die beispielsweise den $(2^M - 2)$-ten Takt jeder Periode 37 (Figur 5) der Taktfolge T als Resetsignal R vom Taktgenerator 10 an den Reseteingang 28 leitet.

Der Flankendetektor 18 bzw. 19 (Typ "synchronous one-shot") gibt an seinem Ausgang das Startsignal an den Startsignaleingang 24 bzw. das Stopsignal an den Stopsignaleingang 25 während eines Taktes ab, der unmittelbar einer fallenden Flanke des Signals auf dem Taktpfad 9 bzw. dem Datenpfad 8 folgt.

Die Interruptschaltung 32 ist z.B. ein Schieberegister mit S Stufen, wobei S = 1, 2, 3, ... festgelegt sein kann. Der Eingang ist mit dem Stopsignaleingang 25 verbunden. Das Stopsignal wird ins Schieberegister der Interruptschaltung 32 übernommen und gespeichert. Nach S Zeitakten erscheint das Stopsignal am Ausgang der Interruptschaltung 32 und wird als Interruptsignal I über die Interruptleitung 33 an den Interrupteingang 34 der Recheneinheit 14 abgegeben. Ist das Freigabesignal F zu berücksichtigen, wird das Freigabesignal F mit dem Stopsignal durch eine logische AND - Funktion verknüpft und das Resultat der AND - Funktion anstelle des Stopsignals in das Schieberegister der Interruptschaltung 32 übernommen.

Die Figur 5 zeigt die Zeitdiagramme der Signale T, A, I und R für den Messkreis 13 der Figur 4. Das Interruptsignal I erscheint immer S - Takte nach der fallenden Flanke des Antwortsignals A und das Resetsignal R kurz vor Ende der Periode 37.

Allerdings ist die Frequenz $f_T$ der Taktfolge T für die Erfindung an sich nicht wesentlich, ja sie muss nicht einmal konstant sein. Beispielsweise liegt die Frequenz $f_T$ im Bereich 10 kHz bis 250 kHz. Hingegen bestimmt die Frequenz $f_O$ des Oszillators 22 (Figur 4) die Genauigkeit, mit der die Verzögerung $\Delta t$ erfasst wird. Typische Verzögerungen $\Delta t$ von echten IC - Karten 2 (Figur 1) weisen Werte kleiner als 400 ns auf, während die autonomen Karten, selbst wenn sie sehr gut programmiert sind, sich mit Werten der Verzögerungen $\Delta t$ im Bereich 1 µs bis 2 µs deutlich von den echten unterscheiden. Die Frequenz $f_O$ des Oszillators 22 ist daher mindestens zu 2,5 MHz zu wählen. Mit einem zulässigen Grenzwertbereich 0 < G < 600 ns kann die Recheneinheit 14 (Figur 2) die echten IC - Karten 2 von den autonomen Karten unterscheiden. Der zulässige Grenzwertbereich G kann auch eine untere Grenze ≠ 0 aufweisen.

Bei jedem Antwortsignal A, das mehrere Bytes umfasst, werden z.B. N logische Werte "0" übertragen, so dass die Recheneinheit 14 eine Folge von N Messwerten $t_1$, $t_2$, $t_3$, ..., $t_N$ übernimmt. Jeder Messwert vergleicht die Recheneinheit 14 mit dem vorbestimmten zulässigen Grenzwertbereich G aus dem Grenzwertspeicher 15 (Figur 2). Liegt wenigstens einer der N Messwerte $t_1$, $t_2$, $t_3$, ..., $t_N$ ausserhalb des zulässigen Grenzwertbereichs G, erzeugt die Recheneinheit 14 das Alarmsignal.

Der Kartenleser 1 (Figur 1) mit den beschriebenen Mitteln zum Datenaustausch 4 weist den Vorteil auf, dass er mit dem Messkreis 13 die echten IC - Karten 2 von den von Unbefugten nachgebauten autonomen Karten, die vollständig in den Kartenkörper integrierte Schaltkreise enthalten und die originale IC - Kartenschaltung 3 mit einem programmierten Mikrocomputer nachahmen ("emulate"), unterscheiden und zurückweisen kann.

Eine Verfeinerung der Methode besteht darin, dass die Recheneinheit 14 statistische Kriterien auf die Folge der Messwerte $t_1$, $t_2$, $t_3$, ..., $t_N$ anwendet und die so berechneten statistischen Parameter mit den vorbestimmten zulässigen Grenzwerten P vergleicht. Ein einfaches statistisches Kriterium bilden beispielsweise die Parameter arithmetisches Mittel < $\Delta t$ >und die Standardabweichung p.

$$< \Delta t > = (\Sigma t_n)/N, \qquad \text{für n = 1 bis N} \qquad (1)$$

$$p^2 = \Sigma(t_n)^2 - (\Sigma t_n)^2/N, \qquad \text{für n = I bis N.} \qquad (2)$$

Die abgegebene Formeln eignen sich zur zeitsparenden Berechnung von < $\Delta t$ > bzw. $p^2$, die nach jeder Messung der Verzögerung $t_n$ erfolgen kann. Wenigstens einer der beiden Parameter wird berechnet und anschliessend zum Vergleich mit den entsprechenden zulässigen Grenzwerten $P_M$ und $P_p$ herangezogen. Ueberschreitet einer der beiden Parameter < $\Delta t$ > bzw. $p^2$ den zugeordneten Grenzwert $P_M$ bzw. $P_p$, erzeugt die Recheneinheit 14 das Alarmsignal. Damit eine für die statische Auswertung brauchbare Folge von Messwerten entsteht, ist für die Frequenz $f_O$ des Oszillators 22 einen Wert $f_O \geq 10$ MHz vorzuziehen, da dann die Auflösungsvermögen des Messkreises wenigstens 100 ns beträgt. Die an den echten IC - Karten 2 ermittelten Parameter $< \Delta t >$ bzw. $p^2$ liegen unterhalb der zulässigen Grenzwerte $P_M$ von 500 ns bzw. $P_p$ von 500 ns$^2$.

Die echten IC - Karten 2, die in der IC - Kartenschaltung 3 schnelle Logik - Schaltkreise mit fester Verdrahtung aufweisen, geben das Antwortsignal A mit einer kleinen Verzögerung $\Delta t$ gegenüber der Taktfolge T und einer fast normalverteilten Folge der Messwerte $t_N$ auf die Datenleitung 8 aus. Demgegenüber muss die autonome Karte in ihrem Mikrocomputer in mehreren Programmschritten zuerst eine Aenderung des logischen Zustandes in der Taktfolge T erkennen und anschliessend das nächste Bit des vorbestimmten Antwortsignals A nach einem programmierten Vorgang generieren und auf die Datenleitung 8 ausgeben. Da die dazu notwendige Anzahl der Programmschritte von der Bitfolge im Antwortsignal A abhängt, unterscheiden sich die bei einer autonomen Karte auftretenden, aufeinanderfolgenden Messwerte $t_N$ der Verzögerung $\Delta t$ erheblich und bilden daher keine normalverteilte Folge der Messwerte $t_N$. Mit den berechneten statistischen Parameter $< \Delta t >$ bzw. $p^2$ sind auch autonome Karten unterscheidbar, die sich im Mittel nur wenig von den echten IC - Karten 2 unterscheiden.

Der Kartenleser 1, der die Echtheit der IC - Karte 2 mit Hilfe der statistischen Kriterien überprüft, weist den Vorteil auf, dass der Schutz vor Betrug auch Karten mit einem wesentlich schnelleren als die heute verfügbaren Mikrocomputer zurückweist.

Da je nach Anwendung der Kartenleser 1 mit einer bestimmten IC - Kartenschaltung 3 (Figur 1) Daten austauschen muss, sind die Grenzwerte $P_M$ und $P_p$ oder/und Grenzwertbereiche G der IC - Kartenschaltung 3 entsprechend zu wählen.

Der Vollständigkeit halber ist erwähnt, dass auch eine einfache analoge Zeitmessung die heute bekannten autonomen Karten aussortieren kann. Der Messkreis 13 (Figur 1) umfasst einen Kondensator mit einer Konstantstromquelle, die auf den Kondensator geschaltet ist, solange eine Ladebedingung, das Eingangssignal E auf logisch "0" und das Antwortsignal A auf logisch "1", erfüllt ist. Die Spannung U steigt am Kondensator proportional zur Zeitspanne $t_N$, in der die Ladebedingung herrscht. Beispielsweise überwacht ein Schmitt - Trigger die Spannung U, der die Spannung U mit einer konstanten Spannung, dem Grenzwert G, vergleicht. Ein Ausgang der Schmitt - Trigger - Schaltung ist durch eine Torschaltung hindurch mit der Signalleitung 17 (Figur 1) und dem Signalschalter 16 verbunden. Uebersteigt die Spannung U über dem Kondensator den Grenzwert G, spricht der Schmitt - Trigger an. Das Alarmsignal wird zum Zeitpunkt des Interruptsignal I (Figur 3) ausgelöst, wenn Schmitt - Trigger angesprochen hat und die Interruptbedingung erfüllt ist. Der Kondensator wird während des Resetsignals R (Figur 3) vollständig entladen und so für die nächste Messung vorbereitet. Der Grenzwert G entspricht der Spannung, die am Kondensator nach eine Ladezeit von etwa 800 ns erreicht ist. Der Grenzwertspeicher 15 (Figur 1) ist in dieser Ausführung ein einfacher Spannungsteiler. Eine derart grobe Ueberprüfung der Verzögerung $\Delta t$ ermöglicht schon die Echtheit der mit dem Kartenleser 1 im Datenaustausch stehenden Datenträger auf einfache Weise festzustellen und gegebenenfalls den Datenaustausch mit einer autonomen Karte abzubrechen.

Die in den Figuren für die Schaltungen erwähnten logischen Bausteine sind z.B. in U. Tieze und Ch. Schenk "Advanced Electronik Circuits", Springer Verlag (1978), inbesondere auf den Seiten 203 - 372 beschrieben. Die logischen Pegelangaben und deren Aenderungen können auch systematisch vertauscht gelesen werden, ohne die Funktion zu beeinträchtigen.

**Patentansprüche**

1.　Kartenleser (1) mit Mitteln zum Datenaustausch (4) mit IC - Karten (2), wobei die Mittel zum Datenaustausch (4) aus wenigstens einem Steuermodul (6), einem Taktgenerator (10), einem Messkreis (13), einer Recheneinheit (14), einem Grenzwertspeicher (15) und einer Kopplungseinrichtung (5) für einen Datenpfad (8) und einen Taktpfad (9) zur IC - Kartenschaltung (3) der IC - Karte (2) bestehen und der bidirektionale Datenpfad (8) für die Uebertragung von Befehlen aus dem Steuermodul (6) zur IC - Kartenschaltung (3) und von Antwortsignalen (A) der IC - Kartenschaltung (3) an das Steuermodul (6) synchron zu einer über den Taktpfad (9) übertragenen Taktfolge (T) des Taktgenerators (10) vorgesehen ist,
**dadurch gekennzeichnet,**
**dass** eine Messeinrichtung (12), die wenigstens den Messkreis (13), die Recheneinheit (14), den Grenzwertspeicher (15) und einen Signalschalter (16) umfasst, zwischen der Kopplungseinrichtung (5) und dem Steuermodul (6) angeordnet ist,
**dass** der Messkreis (13) sowohl mit dem Datenpfad (8) als auch mit dem Taktpfad (9) sowie mit der Recheneinheit (14) verbunden ist,
**dass** der Messkreis (13) eine Einrichtung zum Messen von zeitlichen Verzögerungen $\Delta t$ zwischen einer Flanke der Taktfolge (T) auf dem Taktpfad (9) und einer während derselben Periode (37) der Taktfolge (T) auftretenden Flanke des von der IC - Karte (2) als Antwort an das Steuermodul (6) abgegebenen Antwortsignals (A) auf dem Datenpfad (8) aufweist und
**dass** die Messeinrichtung (12) zum Erkennen von nachahmenden autonomen IC-Karten mit Messwerten $t_n$ der Verzögerung $\Delta t$, die ausserhalb eines vorbestimmten Grenzwertbereiches (G) aus dem Grenzwertspeicher (15) liegen, eingerichtet ist.

2.　Kartenleser (1) nach Anspruch 1, **dadurch ge-**

**kennzeichnet, dass** die Mittel zum Datenaustausch (4) zum Erzeugen eines Alarmsignals eingerichtet sind, wobei das Alarmsignal auf einer Signalleitung (17) erscheint, falls die Messwerte $t_n$ der Verzögerung $\Delta t$ über einem Grenzwert aus dem Grenzwertspeicher (15) oder ausserhalb des vorbestimmten Grenzwertbereiches (G) liegen und dass die Mittel zum Datenaustausch (4) Mittel (16) zum Abbruch des Datenaustausches mit der IC - Karte (2) beim Auftreten des Alarmsignals umfassen.

3. Kartenleser (1) nach Anspruch 2, **dadurch gekennzeichnet, dass** das Steuermodul (6) mit der Recheneinheit (14) mittels einer Signalleitung (17) verbunden ist und dass das Steuermodul (6) Mittel zum Abbruch des Datenaustausches auf dem bidirektionalen Datenpfad (8) beim Eintreffen des Alarmsignals auf der Signalleitung (17) aufweist.

4. Kartenleser (1) nach einem der Ansprüche 1 bis 3, **dadurch gekennzeichnet, dass** der Messkreis (13) einen mit dem Taktpfad (9) verbundenen ersten Flankendetektor (18) zum Erzeugen eines Startsignals beim Erkennen einer ersten Flanke der Taktfolge (T) der Periode (37) und einen mit dem Datenpfad (8) verbundenen zweiten Flankendetektor (19) zum Erzeugen eines Stopsignals beim Erkennen einer der ersten Flanke unmittelbar folgenden zweiten Flanke des Antwortsignals (A) aufweist, dass der Messkreis (13) Mittel zum Messen der zeitlichen Verzögerung $\Delta t$ als eine Zeitspanne zwischen dem Auftreten des Startsignals und dem Stopsignal besitzt und dass zum Übertragen der Messwerte $t_n$ der zeitlichen Verzögerung $\Delta t$ der Messkreis (13) wenigstens mittels einer Messwertleitung (26) mit der Recheneinheit (14) verbunden ist.

5. Kartenleser (1) nach Anspruch 4, **dadurch gekennzeichnet, dass** der Messkreis (13) einen Oszillator (22) zum Erzeugen einer Zeiteinheiten darstellenden Impulsfolge Z, einen Start - Stop - Zähler (20) zum Ausmessen der zeitlichen Verzögerung $\Delta t$ mit den Zeiteinheiten der Impulsfolge (Z) umfasst, dass sich Leitungen von einem Ausgang des Oszillators (22) zum Zeittakteingang (23) des Start - Stop - Zählers (20), von einem Ausgang des ersten Flankendetektors (18) zum Startsignaleingang (24) des Start - Stop - Zählers (20) und von einem Ausgang des zweiten Flankendetektors (19) zum Stopsignaleingang (25) des Start - Stop - Zählers (20) erstrecken und dass jeder Messwert $t_n$ gleich der Anzahl der im Zähler (20) zwischen dem Startsignal und dem Stopsignal aufgezählten Zeittakte ist.

6. Vorrichtung nach einem der Ansprüche 1 bis 5, **dadurch gekennzeichnet, dass** die Recheneinheit (14) Mittel zum Auswerten einer Folge der Messwerte $t_n$ nach statistischen Kriterien und zum Vergleichen von wenigstens einem berechneten statistischen Parameter mit einem im Grenzwertspeicher (15) abgelegten, diesem statistischen Parameter zugeordneten vorbestimmten Grenzwert (P) umfasst und dass weiter die Recheneinheit (14) Mittel zum Erzeugen eines Alarmsignals auf einer Signalleitung (17) aufweist, falls einer der statistischen Parameter ausserhalb des zugeordneten Grenzwertbereiches (P) liegt.

7. Verfahren zur Echtheitserkennung von elektronischen IC - Karten (2) in Kartenlesern (1) bestehend aus wenigstens einem Steuermodul (6), einem Taktgenerator (10), einem Messkreis (13), einer Recheneinheit (14) und einem Grenzwertspeicher (15) während eines Datenaustausches mittels einer Kopplungseinrichtung (5) zwischen Mitteln zum Datenaustausch (4) des Kartenlesers (1) und einer in die IC - Karte (2) eingebauten IC - Kartenschaltung (3), wobei mittels einer Taktfolge (T) auf einem Taktpfad (9) der Datenverkehr auf einem Datenpfad (8) synchronisiert wird, wobei Befehle vom Kartenleser (1) zur IC - Kartenschaltung (3) und Antwortsignale (A) von der IC - Kartenschaltung (3) zum Kartenleser (1) synchron zur Taktfolge (T) übertragen werden,

**dadurch gekennzeichnet,**

**dass** einem Messkreis (13) einer Messeinrichtung (12) im Kartenleser (1) die Taktfolge (T) auf dem Taktpfad (9) und das Antwortsignal (A) auf dem Datenpfad (8) zugeführt wird,

**dass** der Messkreis (13) zeitliche Verzögerungen $\Delta t$ zwischen einer Flanken der Taktfolge (T) und einer in der gleichen Periode (37) der Taktfolge (T) auftretenden Flanke des Antwortsignals (A) misst und

**dass** eine nachahmende autonome IC-Karte mit Messwerten $t_n$ der Verzögerung $\Delta t$, die ausserhalb eines vorbestimmten, im Grenzwertspeicher (15) abgelegten Grenzwertbereiches liegen, durch die Messeinrichtung (12) erkannt und der Datenaustausch auf der Datenleitung (8) unterbrochen wird.

8. Verfahren nach Anspruch 7, **dadurch gekennzeichnet, dass** Zeittakte in einem Messkreis (13) der Messeinrichtung (12) von einem Start - Stop - Zähler (20) während der Zeitspanne vom Auftreten des Startsignals bis zum Auftreten des Stopsignals der gleichen Periode (37) gezählt werden und dass die während dieser Zeitspanne aufgezählte Anzahl der Zeittakte als Messwert $t_n$ mittels einer Messwertleitung (26) an eine Recheneinheit (14) der Messeinrichtung (12) übergeben und der Start - Stop - Zähler (20) auf Null gesetzt wird.

9. Verfahren nach Anspruch 7 oder 8, durch **gekenn-**

**zeichnet**, dass die Messwerte $t_n$ in der Recheneinheit (14) nach statistischen Kriterien untersucht werden, dass wenigstens ein von der Recheneinheit (14) berechneter statistischer Parameter mit entsprechenden im Grenzwertspeicher (15) abgelegten vorbestimmten Grenzwerten (P) verglichen wird und dass der Datenaustausch mit den IC - Karten (2) deren berechneter statistischer Parameter ausserhalb des Grenzwertbereichs (P) liegt, vom Kartenleser (1) abgebrochen wird.

10. Verfahren nach Anspruch 9, **dadurch gekennzeichnet, dass** aus den Messwerten $t_n$ von der Recheneinheit (14) die statistischen Parameter arithmetisches Mittel < $\Delta t$ > und die Standardabweichung p berechnet werden und dass der Datenaustausch mit den IC - Karten (2) deren arithmetisches Mittel < $\Delta t$ > oder deren Standardabweichung p ausserhalb des Grenzwertbereichs ($P_M$ bzw. $P_p$) liegen, vom Kartenleser (1) abgebrochen wird.

11. Verfahren nach Anspruch 9 oder 10, **dadurch gekennzeichnet, dass** wenigstens einer der statistischen Parameter nach jeder Messung der Verzögerung $t_n$ berechnet wird.

12. Verfahren nach einem der Ansprüche 9 bis 11, **dadurch gekennzeichnet, dass** der Datenverkehr vom Messkreis (13) während der ersten Befehls- und Antwortphasen, während denen die IC - Karte (1) identifiziert wird, überwacht wird.

13. Verfahren nach einem der Ansprüche 7 bis 12, **dadurch gekennzeichnet, dass** Zeittakte in einem Taktgenerator (10) der Mittel zum Datenaustausch (4) $2^M$-fach untersetzt werden und die Taktfolge (T) bilden, dass in jeder Periode (37) der Taktfolge (T) der Taktgenerator (10) ein Resetsignal (R) auf einer den Taktgenerator (10) und den Start - Stop - Zähler (20) verbindenden Resetleitung (30) erzeugt, dass der Start - Stop - Zähler (20) mittels des Resetsignals (R) auf den Wert Null zurückgesetzt wird und dass eine Interruptschaltung (32) des Messkreises (13) das Stopsignal um eine Anzahl Zeittakte verzögert jedoch vor dem Resetsignal (R) als Interruptsignal (I) für die Recheneinheit (14) erzeugt wird, wobei das Interruptsignal (I) die Recheneinheit (14) veranlasst, den Messwert $t_n$ im Start - Stop - Zähler (20) zur Weiterverarbeitung zu übernehmen.

14. Verfahren nach einem der Ansprüche 7 bis 13, **dadurch gekennzeichnet, dass** bei einem Abbruch des Datenaustausches die IC - Karte (2) vom Kartenleser (1) als falsch zurückgewiesen wird.

**Claims**

1. Card reader (1) with means for data exchange (4) with IC cards (2), said means for data exchange (4) comprising at least a control module (6), a clock generator (10), a measuring circuit (13), a computing unit (14), a limiting value memory (15) and coupling device (5) for coupling a data path (8) and a clock signal path (9) to the CI card circuit (3) of the IC card (2) and the bidirectional data path (8) being designed for the transfer of commands from the control module (6) to the IC card circuit (3) and of response signals (A) from the IC card circuit (3) to the control module (6) occurring in synchronism with a clock signal sequence (T) of the clock generator (10) being transmitted via the clock signal path (9), **characterized in that**

   - a measuring device (12) comprising at least the measuring circuit (13), the computing unit (14), the limiting value memory (15) and a signal switch (16) is arranged between the coupling means (5) and the control unit (6),

   - the measuring circuit (13) is connected, both with the data path (8) and with the clock signal path (9), as well as with the computing unit (14),

   - the measuring circuit (13) comprises a device for measuring time delays $\Delta t$ between an edge of the clock signal sequence (T) in the clock signal path (9) and of an edge of the response signal (A) delivered by the IC card (2) as a response to the control module (6) during the same period (37) of the clock signal sequence (T) in the data path (8), and

   - the measuring device (12) is designed to recognize autonomous imitating IC cards having measured values $t_n$ of the time delay $\Delta t$ which are outside a predetermined limiting value range (G) from the limiting value memory (15).

2. Card reader according to claim 1, **characterized in that** the means for data exchange (4) are designed to generate an alarm signal, said alarm signal appearing on a signal line (17) when the measured values $t_n$ of the time delay $\Delta t$ are above a limiting value from the limiting value memory (15) or outside the predetermined limiting value range (G), and **in that** the means for data exchange (4) comprise means (16) to interrupt the data exchange with the IC card (2) upon arrival of the alarm signal.

3. Card reader (1) of claim (2), **characterized in that** the control module (6) is connected with the computing unit (14) via a signal line (17), and **in that** the control module (6) comprises means to interrupt the data exchange in the bidirectional data path (8) upon arrival of the alarm signal in the signal line (17).

4. Card reader (1) of one of the claims 1 to 3, **characterized in that** the measuring circuit (13) comprises a first edge detector (18) connected with the clock signal path (9) and generating a start signal when recognizing a first edge of the clock signal sequence (T) of period (37), and a second edge detector (19) connected with the data path (8) and generating a stop signal when recognizing a second edge of the response signal (A) immediately following the first edge, **in that** the measuring circuit (13) includes means to measure the time delay $\Delta t$ as a time elapsed between the appearance of the start signal and the appearance of the stop signal, and **in that** in order to transmit the measured values $t_n$ of time delay $\Delta t$, the measuring circuit (13) is connected with the computing unit (14) via at least one measured value line (26).

5. Card reader (1) of claim 4, **characterized in that** the measuring circuit (13) comprises an oscillator (22) generating a pulse sequence Z representing units of time, a start-stop counter (20) measuring the time delay $\Delta t$ in units of the pulse sequence (Z), **in that** lines extend from an output of the oscillator (22) to the clock input (23) of the start-stop counter (20), from an output of the first edge detector (18) to the start signal input (24) of the start-stop counter (20), and from an output of the second edge detector (19) to the stop signal input (25) of the start-stop counter (20), and **in that** every measured value $t_n$ is given by the number of clock signals counted in counter (20) between the start signal and the stop signal.

6. Device according to one of claims 1 to 5, **characterized in that** the computing unit (14) comprises means to evaluate a sequence of measured values $t_n$ according to statistical criteria and to compare at least one of the statistical parameters calculated with a predetermined limiting value (P) assigned to this statistical parameter and stored in the limiting value memory (15), and **in that** in addition the computing unit (14) comprises means for generating an alarm signal in a signal line (17) when one of the statistical parameters is outside the assigned limiting value range (P).

7. Method to recognize the authenticity of electronic IC cards (2) in card readers (1), comprising at least a control module (6), a clock generator (10), a measuring circuit (13), a computing unit (14) and a limiting value memory (15) during data exchange by means of a coupling device (5) between means for data exchange (4) of the card reader (1) and an IC card circuit (3) incorporated into the IC card (2), the data traffic in a data path (8) being synchronized by means of a clock signal sequence (T) in a clock signal path (9) and commands from the card reader (1) to the IC card circuit (3) as well as response signals (A) from the IC card circuit (3) to the card reader (1) being transmitted in synchronism with the clock signal sequence (T), **characterized in that**

- the clock signal sequence (T) in clock signal path (9) and the response signal (A) in data path (8) are supplied to a measuring circuit (13) of a measuring device (12) in the card reader (1),

- the measuring circuit (13) measures time delays $\Delta t$ between an edge of the clock signal sequence (T) and an edge of the response signal (A) appearing during the same period (37) of the clock signal sequence (T), an autonomous imitating IC card having measured values $t_n$ of the time delay $\Delta t$ outside a predetermined limiting value range that is stored in the limiting value memory (15) is recognized by the measuring device (12), and data exchange in the data line (8) is interrupted.

8. Method of claim 7, **characterized in that** clock signals are counted in a measuring circuit (13) of the measuring device (12) by a start-stop counter (20) during the time between appearance of the start signal and appearance of the stop signal during the same period (37), and **in that** the number of clock signals counted during this time is transferred to a computing unit (14) of the measuring device (12) as the measured value $t_n$ while the start-stop counter (20) is reset to zero.

9. Method of claim 7 or 8, **characterized in that** the measured values $t_n$ are evaluated according to statistical criteria in the computing unit (14), **in that** at least one of the statistical parameters calculated by the computing unit (14) is compared with corresponding predetermined limiting values (P) stored in the limiting value memory (15), and **in that** data exchange with IC cards (2) having the computed statistical parameter outside the limiting value range (P) is interrupted by the card reader (1).

10. Method of claim 9, **characterized in that** from the measured values $t_n$ the computing unit (14) computes the statistical parameters of the arithmetic mean $< \Delta t >$ and of the standard deviation p, and **in that** data exchange with IC cards (2) having their arithmetic means $< \Delta t >$ or their standard deviation p outside the limiting value range ($P_M$ or $P_P$) is interrupted by the card reader (1).

11. Method of claim 9 or 10, **characterized in that** at least one of the statistical parameters is calculated after every measurement of the time delay $t_n$.

12. Method of one of the claims 9 to 11, **characterized in that** data exchange is monitored by the measuring circuit (13) during the early command and response phases during which the IC card (1) is identified.

13. Method of one of the claims 7 to 11, **characterized in that** clock signals are scaled down by a factor of $2^M$ in a clock generator (10) of the means for data exchange (4) and form the clock signal sequence (T), **in that** in each period (37) of the clock signal sequence (T) the clock generator (10) generates a reset signal (R) in a reset line (30) connecting the clock generator (10) and the start-stop counter (20), **in that** the start-stop counter (20) is reset by means of the reset signal (R) to a value of zero, and **in that** an interrupt circuit (32) of the measuring circuit (13) delays the stop signal by a number of clock signals, but is generated in advance of the reset signal (R) as an interrupt signal (I) for the computing unit (14), the interrupt signal (I) causing the computing unit (14) to take over the measured value $t_n$ in the start-stop counter (20) for further processing.

14. Method of one of claims 7 to 13, **characterized in that** upon interrupt of the data exchange the IC card (2) is rejected by the card reader (1) as being false.

**Revendications**

1. Lecteur de cartes (1) avec des moyens pour l'échange de données (4) avec des cartes à circuit intégré (2), dans lequel les moyens pour l'échange de données (4) consistent d'au moins un module de commande (6), un générateur d'impulsions (10), un circuit de mesure (13), une unité de calcul (14), une mémoire de valeur limite (15) et un dispositif d'accouplement (5) pour un chemin de données (8) et un chemin d'impulsions (9) qui conduit au circuit de carte (3) de la carte (2) et dans lequel le chemin de données bidirectionnel (8) est prévu pour la transmission de commandes du module de commande (6) vers le circuit de carte (3) et de signaux de réponse (A) du circuit de carte (3) vers le module de commande (6) de façon synchrone par rapport à la fréquence d'horloge (T) du générateur d'impulsions (10) transmise par le chemin d'impulsions (9), **caractérisé en ce que**,

-   qu'un dispositif de mesure (12), qui comprend au moins le circuit de mesure (13), l'unité de calcul (14), la mémoire de valeur limite (15) et un interrupteur de signal (16), est disposé entre le dispositif d'accouplement (5) et le module de commande (6),

-   que le circuit de mesure (13) est relié aussi bien au chemin de données (8) qu'au chemin d'impulsions (9) ainsi qu'à l'unité de calcul (14),

-   que le circuit de mesure (13) présente un dispositif pour la mesure de retards de temps $\Delta t$ entre un flanc de la fréquence d'horloge (T) sur le chemin d'impulsions (9) et un flanc du signal de réponse (A) émis de la carte (2) comme réponse au module de commande (6) sur le chemin de données (8), lequel flanc se manifeste pendant la même période (37) de la fréquence d'horloge (en T), et

-   que le dispositif de mesure (12) est configuré pour reconnaître des cartes à circuit intégré autonomes imitantes grâce à des valeurs relevées $t_n$ du retard $\Delta t$ situées hors d'une zone de valeur limite préétablie (G) de la mémoire de valeur limite (15).

2. Lecteur de cartes (1) selon la revendication 1, **caractérisé par le fait que** les moyens pour l'échange de données (4) sont configurés pour générer un signal d'alarme qui apparaît sur un chemin de signal (17), au cas où les valeurs relevées $t_n$ du retard $\Delta t$ sont au-dessus d'une valeur limite de la mémoire de valeur limite (15) ou hors de la zone de valeur limite préétablie (G), et que les moyens pour l'échange de données (4) comprennent des moyens (16) pour l'interruption de l'échange de données avec la carte (2) quand il y a le signal d'alarme.

3. Lecteur de cartes (1) selon la revendication 2, **caractérisé par le fait que** le module de commande (6) est relié à l'unité de calcul (14) moyennant un chemin de signal (17), et que le module de commande (6) présente des moyens pour l'interruption de l'échange de données sur le chemin de données bidirectionnel (8) quand le signal d'alarme arrive sur le chemin de signal (17).

4. Lecteur de cartes (1) selon l'une des revendications 1 à 3, **caractérisé par le fait que** le circuit de mesure (13) présente un premier détecteur de flanc (18) relié au chemin d'impulsions (9) pour générer un signal de départ quand il reconnaît un premier flanc de la fréquence d'horloge (T) de période (37) et un second détecteur de flanc (19) relié au chemin de données (8) pour générer un signal d'arrêt quand il reconnaît un second flanc du signal de réponse (A) qui suit directement le premier flanc, que le circuit de mesure (13) possède des moyens pour mesurer le retard temporel $\Delta t$ comme un laps de temps entre l'apparition du signal de départ et le signal d'arrêt et que, pour transmettre les valeurs relevées $t_n$ du retard temporel $\Delta t$, le circuit de mesure (13) est relié à l'unité de calcul (14) au moyen d'un conduit de valeur mesurée (26).

5. Lecteur de cartes (1) selon la revendication 4, **caractérisé par le fait que** le circuit de mesure (13) comprend un oscillateur (22) pour générer une séquence d'impulsion Z qui représente des unités de temps, un compteur start-stop (20) pour mesurer le retard temporel $\Delta t$ avec les unités de temps de la séquence d'impulsion (Z), que des chemins s'étendent d'une sortie de l'oscillateur (22) à l'entrée de signal d'horloge (23) du compteur start-stop (20), d'une sortie du premier détecteur de flanc (18) à l'entrée de signal de départ (24) du compteur start-stop (20) et d'une sortie du second détecteur de flanc (19) à l'entrée de signal d'arrêt (25) du compteur start-stop (20) et que chaque valeur mesurée tn est égal au nombre des signaux d'horloge comptés par le compteur (20) entre le signal de départ et le signal d'arrêt.

6. Dispositif selon l'une des revendications 1 à 5, **caractérisé par le fait que** l'unité de calcul (14) comprend des moyens pour évaluer une séquence des valeurs relevées $t_n$ selon des critères statistiques et pour comparer au moins un paramètre statistique calculé avec une valeur limite préétablie (P) stockées dans la mémoire de valeur limite (15) et associée à ce paramètre statistique et que l'unité de calcul (14) en plus présente des moyens pour générer un signal d'alarme sur un conduit de signal (17) au cas où l'un des paramètres statistiques se trouve hors de la zone de valeur limite associée (P).

7. Procédé pour la reconnaissance de l'authenticité de cartes électroniques à circuit intégré (2) dans des lecteurs de cartes (1) constitué d'au moins un module de commande (6), un générateur d'impulsions (10), un circuit de mesure (13), une unité de calcul (14) et une mémoire de valeur limite (15), pendant un échange de données au moyen d'un dispositif d'accouplement (5) entre des moyens pour l'échange de données (4) du lecteur de cartes (1) et un circuit de carte (3) incorporé dans la carte (2), en synchronisant le trafic des données sur un chemin de données (8) moyennant une fréquence d'horloge (T) sur un chemin d'impulsions (9), en transmettant des commandes du lecteur de cartes (1) vers le circuit de carte (3) et des signaux de réponse (A) du circuit de carte (3) au lecteur de cartes (1) de manière synchrone par rapport à la fréquence d'horloge (T),
**caractérisé par le fait,**
**que** la fréquence d'horloge (T) est convoyée à un circuit de mesure (13) d'un dispositif de mesure (12) dans le lecteur de cartes (1) sur le chemin d'impulsions (9) et le signal de réponse (A) sur le chemin de données (8),
**que** le circuit de mesure (13) mesure des retards de temps $\Delta t$ entre un flanc de la fréquence d'horloge (T) et un flanc du signal de réponse ( A) qui se manifeste dans la même période (37) de la fréquence d'horloge (T), et qu'une carte à circuit intégré autonome qui imite, avec des valeurs relevées $t_n$ du retard $\Delta t$ situées hors d'une zone de valeur limite préétablie déposée dans la mémoire de valeur limite (15), est reconnue par le dispositif de mesure (12) et que l'échange de données sur le conduit de données (8) est interrompu.

8. Procédé selon la revendication 7, **caractérisé par le fait que** des signaux d'horloge dans un circuit de mesure (13) du dispositif de mesure (12) sont comptés par un compteur start-stop (20) pendant le laps de temps de l'apparition du signal de départ jusqu'à l'apparition du signal d'arrêt dans la même période (37) et que le nombre des signaux d'horloge dénombré pendant ce laps de temps est consigné comme valeur mesurée $t_n$ au moyen d'un conduit de valeur mesurée (26) à une unité de calcul (14) du dispositif de mesure (12) et que le compteur start-stop (20) est remis à zéro.

9. Procédé selon la revendication 7 ou 8, **caractérisé par le fait que** les valeurs relevées $t_n$ sont examinées dans l'unité de calcul (14) selon des critères statistiques, et qu'au moins un paramètre statistique calculé par l'unité de calcul (14) est comparé avec des valeurs limite préétablies (P) correspondantes déposées dans la mémoire de valeur limite (15) et que l'échange de données avec les cartes (2) dont le paramètre statistique calculé se trouve hors du secteur de valeurs limite (P) est interrompu par le lecteur de cartes (1).

10. Procédé selon la revendication 9, **caractérisé par le fait que** l'unité de calcul (14) calcule des valeurs relevées tn la moyenne arithmétique des paramètres < $\Delta t$ > et la déviation standard p et que l'échange de données avec les cartes (2) dont le moyenne arithmétique < $\Delta t$ > ou dont la déviation standard p se trouvent hors du secteur de valeurs limites ($P_M$) respectivement ($P_P$), est interrompu par le lecteur de cartes (1).

11. Procédé selon la revendication 9 ou 10, **caractérisé par le fait qu'**au moins l'un des paramètres statistiques est calculé après chaque mesure du retard $t_n$.

12. Procédé selon une des revendications 9 jusqu'à 11, **caractérisé par le fait que** le trafic des données est surveillé par le circuit de mesure (13) pendant les premières phases de commande et réponse, pendant lesquelles la carte (1) est identifiée.

13. Procédé selon l'une des revendications 7 à 12, **ca-**

**ractérisé par le fait que** des signaux d'horloge sont divisés d'un facteur $2^M$ fois dans un générateur d'impulsions (10) des moyens pour l'échange de données (4) et forment la sequence d'horloge (T), que dans chaque période (37) de la séquence d'horloge (T) le générateur d'impulsions (10) génère un signal de remise à zéro (R) sur un chemin de remise à zéro (30) qui relie le générateur d'impulsions (10) et le compteur start-stop (20), que le compteur start-stop (20) est remis à zéro moyennant le signal de remise à zéro (R) et qu'un circuit d'interruption (32) du circuit de mesure (13) retarde le signal d'arrêt d'un nombre de signaux d'horloge, avant le signal de remise à zéro (R) est généré comme signal d'interruption (1) pour l'unité de calcul (14), le signal d'interruption (1) induisant l'unité de calcul (14) à assumer la valeur mesurée tn dans le compteur start-stop (20) pour le traitement ultérieur.

14. Procédé selon une des revendications 7 jusqu'à 13, **caractérisé par le fait qu'**en cas d'une interruption de l'échange de données, la carte (2) est rejetée par le lecteur de cartes (1) en tant que fausse.

## Fig. 1

## Fig. 2:

EP 1 050 008 B1

Fig. 3:

Fig. 4:

14

Fig. 5: